# EUROPÄISCHE PATENTSCHRIFT

(11) **EP 3 291 908 B1**
(45) Veröffentlichungstag und Bekanntmachung des Hinweises auf die Patenterteilung: **06.03.2019**
(21) Anmeldenummer: 16726511.5
(22) Anmeldetag: 25.05.2016
(51) Int. Cl.: B01D 45/16, B01D 45/18

(54) **ABSCHEIDEVORRICHTUNG ZUM ABSCHEIDEN VON PARTIKELN AUS EINEM LUFTSTROM**
SEPARATING DEVICE FOR SEPARATING PARTICLES FROM AN AIR FLOW
DISPOSITIF DE SÉPARATION POUR SÉPARER DES PARTICULES D'UN FLUX D'AIR

(30) Priorität: 01.07.2015 DE 102015212308
(43) Veröffentlichungstag der Anmeldung: 14.03.2018
(73) Patentinhaber: Siemens Mobility GmbH, 81739 München (DE)
(72) Erfinder: DÜNNWALD, Tim, 80999 München (DE); OBERMAIER, Arthur, 85716 Unterschleißheim (DE); PLINNINGER, Thomas, 83026 Rosenheim (DE)
(86) Internationale Anmeldenummer: PCT/EP2016/061741
(87) Internationale Veröffentlichungsnummer: WO 2017/001121

(56) Entgegenhaltungen:
- EP-A1- 1 918 009
- DE-A1- 3 041 547
- DE-A1- 10 354 400
- DE-C- 837 786
- US-A- 5 403 367
- US-A- 5 472 463

## Beschreibung

Die Erfindung betrifft ein Schienenfahrzeug mit den im Oberbegriff des Patentanspruches 1 angegebenen Merkmalen.

Abscheidevorrichtungen umfassen einen Zyklonabscheider, einen zum Zyklonabscheider hinführenden Rohluftkanal zur Zuführung eines mit Partikeln beladenen Rohluftstroms und einen vom Zyklonabscheider wegführenden Reinluftkanal zum fortführen eines Reinluftstromes. Der Zyklonabscheider weist ein kastenförmiges Abscheidergehäuse mit einer Mehrzahl an dieses durchsetzenden Abscheidezyklonen zum Abscheiden von Partikeln aus dem Rohluftstrom in das Abscheidergehäuse und eine Austragsöffnung zum Austragen von abgeschiedenen Partikeln aus dem Abscheidergehäuse auf.

Derartige Abscheidevorrichtungen sind beispielsweise aus den Offenlegungsschriften DE 10 2005 026 811 A1 und DE 10 2012 011 358 A1 bekannt. Der in die Abscheidezyklone einströmende Rohluftstrom wird dort jeweils durch Leitschaufeln in eine Rotationsbewegung versetzt, aufgrund welcher die mitgeführten Partikel durch die erfahrene Fliehkraft in Richtung Rohrwandungen der Abscheidezyklone beschleunigt werden. Die Partikel werden an den Rohrwandungen gesammelt und durch Austragsfenster in unteren Abschnitten der Rohrwandungen entfernt. Die gereinigte Luft tritt an den anderen Enden der Abscheidezyklone als Reinluftstrom aus, während die abgeschiedenen Partikel schwerkraftgetrieben von den Austragsfenstern nach unten auf den Boden des Abscheidergehäuses fallen. Zum effektiven Abtransport der abgeschiedenen Partikel aus dem Abscheidergehäuse ist es beispielsweise aus der Offenlegungsschrift DE 10 1005 026 811 A1 bekannt, an die Austragsöffnung einen Austragslüfter anzuschließen, der zum Absaugen der Partikel einen Unterdruck an der Austragsöffnung erzeugt und diese über einen mit ausgetragenen Partikeln angereicherten Abluftstrom abzutransportieren.

Der Erfindung liegt die Aufgabe zugrunde, ein Schienenfahrzeug der eingangs genannten Art bereitzustellen, dessen Abscheidevorrichtung bei kompakterer Bauweise kostengünstiger und wartungsärmer als die bekannte Abscheidevorrichtung ist.

Die Aufgabe wird erfindungsgemäß gelöst durch ein Schienenfahrzeug der eingangs genannten Art mit den im kennzeichnenden Teil des Patentanspruches 1 angegebenen Merkmalen. Die Abscheidevorrichtung zum Reinigen eines Luftstromes einer Kühlluftanlage zur Versorgung des Maschinenraums des Schienenfahrzeugs, insbesondere einer Lokomotive, angewandt. Erfindungsgemäß ist die Austragsöffnung mit einer Engstelle einer Venturidüse zum Absaugen eines mit ausgetragenen Partikeln angereicherten Abluftstroms verbunden. Die Venturidüse ersetzt den aufbauenden Austragslüfter einschließlich dessen Anschlüsse und Ansteuerung. Hierdurch wird die erfindungsgemäße Abscheidevorrichtung kompakter und durch den Wegfall des Austragslüfters auch kostengünstiger. Durch den Entfall des Austragslüfters sinkt die Anzahl beweglicher Teile, wodurch die erfindungsgemäße Abscheidevorrichtung auch wartungsärmer wird. Die Venturidüse ist mit dem Rohluftkanal über einen von diesem abgezweigten Seitenkanal verbunden. Der zum Erzeugen des Unterdruckes in der Engstelle der Venturidüse erforderliche Luftstrom wird hier in vorteilhafter Weise vom Rohluftstrom abgezweigt, wodurch eine gesonderte Erzeugung dieses Luftstroms entfallen kann. Der zu erzeugende Rohluftstrom wird hierdurch zwar etwas größer, kann aber durch einen geringfügig größer dimensionierten Lüfter oder eine etwas höhere Lüfterdrehzahl bewerkstelligt werden; es können allerdings hierfür auch Reserven aus einer möglichen Überdimensionierung des Lüfters genutzt werden.

Weitere Eigenschaften und Vorteile der erfindungsgemäßen Abscheidevorrichtung ergeben sich aus nachfolgender Beschreibung eines Ausführungsbeispiels anhand der Zeichnungen, in deren
- FIG 1: eine erfindungsgemäße Abscheidevorrichtung in perspektivischer Darstellung und
- FIG 2: die Abscheidevorrichtung aus FIG 1 in einem Längsschnitt
schematisch veranschaulicht sind.

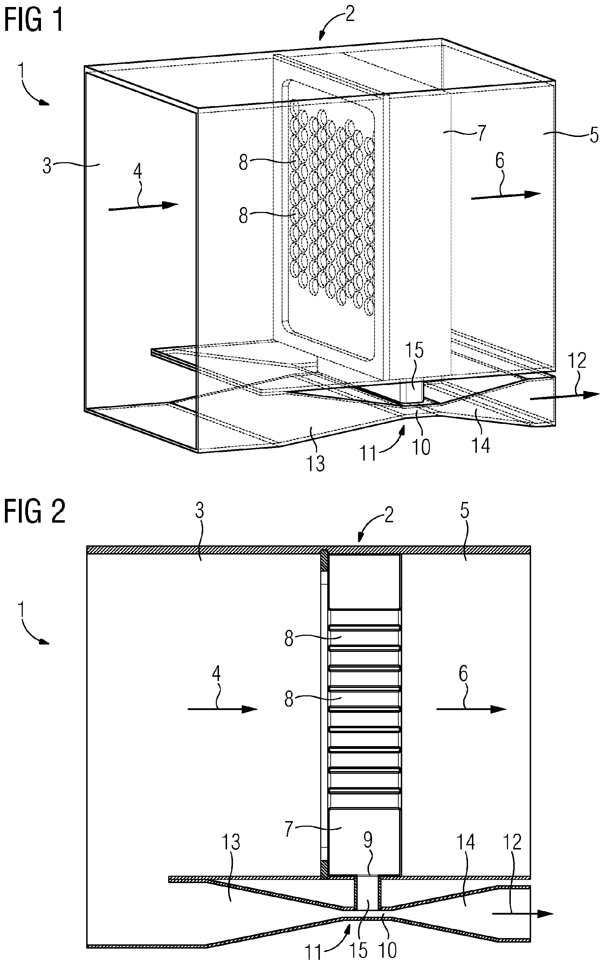

Gemäß FIG 1 und FIG 2 umfasst eine Abscheidevorrichtung 1 zum Abscheiden von Partikeln, beispielsweise Staub- oder Wasserpartikel, aus einem Luftstrom einen an sich bekannten Zyklonabscheider 2. Der Zyklonabscheider 2 ist im rechteckigen Querschnitt eines Luftkanals angeordnet, der Teil einer Kühlluftanlage zur Versorgung eines Maschinenraums einer Lokomotive mit einem gekühlten Luftstrom sein kann. Der Luftkanal weist einen Rohluftkanal 3 auf, durch den ein mit Partikeln beladener Rohluftstrom 4 zum Zyklonabscheider 2 hingeführt wird. Des Weiteren weist der Luftkanal einen Reinluftkanal 5 auf, durch den ein Reinluftstrom 6 vom Zyklonabscheider 2 weggeführt wird. Der Zyklonabscheider 2 weist ein kastenförmiges Abscheidergehäuse 7 auf. Das Abscheidergehäuse 7 ist von einer Mehrzahl an in Strömungsrichtung ausgerichteten, parallel zueinander angeordneten Abscheidezyklonen 8 durchsetzt, die zum Abscheiden von Partikeln aus dem Rohluftstrom 4 in das Abscheidergehäuse 7 ausgebildet sind. Die in den Abscheidezyklonen 8 abgeschiedenen Partikel fallen auf einen Boden des Abscheidergehäuses 7, in dem sich eine rechteckige, den Kanalquerschnitt überspannende, Austragsöffnung 9 befindet. Durch die Austragsöffnung 9 werden auf den Boden gefallene Partikel aus dem Abscheidergehäuse 7 ausgetragen. Hierzu zweigt stromauf des Zyklonabscheiders 2 ein Seitenkanal 13 vom Rohluftkanal 3 ab, dessen Querschnitt sich zunächst bis zu einer Engstelle 10 verjüngt und anschließend wieder zu einem Abluftkanal 14 erweitert. Diese Seitenkanalkonstruktion bildet eine Venturidüse 11, deren Engstelle 10 über einen Austragsstutzen 15 mit der Austragsöffnung 9 verbunden ist.

Der in den Seitenkanal 13 abgezweigte Teil des Rohluftstromes 4 wird durch die Querschnittsverringerung derart beschleunigt, dass in der Engstelle 10 ein Unterdruck entsteht, durch den die abgeschiedenen Partikel aus dem Abscheidergehäuse 7 mit einem Abluftstrom 12 abgesaugt werden, der die Engstelle 10 über den Abluftkanal 14 verlässt.

Auf diese Weise wird ein gesonderter Austragslüfter zur Erzeugung eines Unterdrucks am Austragsstutzen 15 ebenso eingespart, wie dessen Anschlüsse und Ansteuerung. Die erfindungsgemäße Abscheidevorrichtung 1 erfordert damit weniger Bauraum und ist auch durch Vermeidung beweglicher Teile wartungsärmer und weniger störanfällig.

## Patentansprüche

1. Schienenfahrzeug, insbesondere Lokomotive, umfassend einen Maschinenraum und eine Kühlluftanlage zur Versorgung des Maschinenraums mit einem gekühlten Luftstrom sowie eine Abscheidevorrichtung (1) zum Abscheiden von Partikeln aus dem Luftstrom, **dadurch gekennzeichnet, dass** die Abscheidevorrichtung (1) einen Zyklonabscheider (2), einen zum Zyklonabscheider (2) hinführenden Rohluftkanal (3) zur Zuführung eines mit Partikeln beladenen Rohluftstroms (4) und einen vom Zyklonabscheider (2) wegführenden Reinluftkanal (5) zum Abführen eines Reinluftstroms (6) umfasst, wobei der Zyklonabscheider (2) ein kastenförmiges Abscheidergehäuse (7) mit einer Mehrzahl an dieses durchsetzenden Abscheidezyklonen (8) zum Abscheiden von Partikeln aus dem Rohluftstrom (4) in das Abscheidergehäuse (7) und eine Austragsöffnung (9) zum Austragen von abgeschiedenden Partikeln aus dem Abscheidergehäuse (7) aufweist, wobei die Austragsöffnung (9) mit einer Engstelle (10) einer Venturidüse (11) zum Absaugen eines mit ausgetragenen Partikeln angereicherten Abluftstromes (12) verbunden ist, und wobei die Venturidüse (11) mit dem Rohluftkanal (3) über einen von diesem abzweigenden Seitenkanal (13) verbunden ist.

## Claims

1. Rail vehicle, in particular locomotive, comprising a machine compartment and a cooling air system for supplying the machine compartment with a cooled air flow, and a separating device (1) for separating particles from the air flow, **characterised in that** the separating device (1) comprises a cyclone separator (2), a raw air channel (3) leading to the cyclone separator (2) for feeding a raw air flow (4) laden with particles and a clean air channel (5) leading away from the cyclone separator (2) for leading away a clean air flow (6), wherein the cyclone separator (2) has a box-shaped separator housing (7) having a plurality of separator cyclones (8) penetrating the separator housing (7) for separating particles from the raw air flow (4) into the separator housing (7) and a discharge opening (9) for discharging separated particles from the separator housing (7), wherein the discharge opening (9) is connected to a constricted section (10) of a Venturi nozzle (11) for suctioning away an exhaust air flow (12) to which discharged particles have been added, and wherein the Venturi nozzle (11) is connected to the raw air channel (3) via a side channel (13) branching off therefrom.

## Revendications

1. Véhicule sur rails, notamment locomotive, comprenant un compartiment machines et une installation d'air de refroidissement permettant d'alimenter le compartiment machines avec un flux d'air refroidi, ainsi qu'un dispositif de séparation (1) permettant de séparer des particules du flux d'air, **caractérisé en ce que** le dispositif de séparation (1) comprend un séparateur à cyclones (2), un canal d'air brut (3) menant au séparateur à cyclones (2) pour acheminer un flux d'air brut (4) chargé en particules et un canal d'air purifié (5) partant du séparateur à cyclones (2) pour évacuer un flux d'air purifié (6), le séparateur à cyclones (2) comprenant une enveloppe de séparateur (7) en forme de caisson présentant une pluralité de cyclones de séparation (8) la traversant pour séparer des particules du flux d'air brut (4) dans l'enveloppe de séparateur (7) et une ouverture d'évacuation (9) pour évacuer des particules séparées hors de l'enveloppe de séparateur (7), l'ouverture d'évacuation (9) étant raccordée à un étranglement (10) d'une buse venturi (11) pour l'aspiration d'un flux d'air d'évacuation (12) enrichi en particules évacuées, et la buse venturi (11) étant raccordée au canal d'air brut (3) par un canal latéral (13) bifurquant depuis celui-ci.
